# EUROPEAN PATENT SPECIFICATION

(11) **EP 1 877 319 B1**
(45) Date of publication and mention of the grant of the patent: **01.10.2008**
(21) Application number: 06706280.2
(22) Date of filing: 18.01.2006
(51) Int. Cl.: B65D 47/24, B65D 55/02, B65D 83/14, F16K 17/38

(54) **A CONTAINER WITH A DISPENSING CLOSURE COMPRISING A SAFETY SYSTEM**
BEHÄLTER MIT EINEM AUSGABEVERSCHLUSS MIT SICHERHEITSSYSTEM
RÉCIPIENT COMPRENANT UNE FERMETURE DE DISTRIBUTION AVEC DISPOSITIF DE SÉCURITÉ.

(30) Priority: 21.01.2005 EP 05100386
(43) Date of publication of application: 16.01.2008
(73) Proprietor: Nestec S.A., 1800 Vevey (CH)
(72) Inventor: LEBRAND, Pierre Henri, F-60510 Bonliers (FR); DELANDE, Bruno Sadi Henri, F-60690 Marseille en Beauvaisis (FR); DELAUNAY, Jean-François André Aimé, F-60650 La Chapelle aux Pots (FR); CHARLIER, Christophe Jean-Marie Yves, 43100 PARMA (IT)
(86) International application number: PCT/EP2006/000402
(87) International publication number: WO 2006/077087

(56) References cited:
- EP-A- 1 065 150
- EP-A- 1 591 376
- WO-A-91/10607
- WO-A-03/086892
- GB-A- 2 187 822
- US-A1- 2002 190 087
- US-A1- 2004 216 802

## Description

The present invention relates to a container, preferably a pressurized container for containing a frozen viscous product, said container having a dispensing closure with a safety system that prevents dispensing of the contained product when the temperature of the container is above a predetermined safety temperature.

More precisely, the safety system ensures that a consumer cannot actuate the dispensing valve system when the product is too fluid.

For the packing and dispensing of products, it is known to use pressurized containers comprising dispensing valves, such as the one described in the document WO 91/10607.

A dispensing valve allows a consumer to efficiently dose and dispense the product.

In the following description and for the sake of the clarity of the description, the product contained in the container of the invention is described as soft ice cream. However, it should be understood that this example is not limitative, and that other types of temperature sensitive products can also suitably be packaged in the container of the invention.

It has been found that some products, like for example soft ice cream have to be dispensed from the container into which they are stored, at a certain, predetermined temperature.

In the example of soft - "Italian-like" - ice cream, there are two reasons for this temperature. Firstly, for the soft ice cream to have a nice appearance to the consumer when it is dispensed, it is known that the dispenser has to be at a temperature less than about -17°C. If the dispenser is warmer at the time the consumer uses it, then the ice cream is too fluid cannot be properly eaten, which is clearly disadvantageous to the consumer.

More importantly, for soft ice cream that is stored in a pressurized container, if the container is too warm and therefore if the ice cream is too fluid, there is a risk that ice cream squirts out of the container opening with force, which is clearly disadvantageous to the consumer, as ice cream will be spilled everywhere around.

Therefore, a need exists for a container, especially but not necessarily a pressurized container, that comprises a system to prevent dispensing of the contents if the temperature of the container is above a predetermined temperature, at the time of dispensing.

The present invention addresses the problems set out above with a container for storing and dispensing a product, said container comprising:
(i) a container body having an opening, for containing the product,
(ii) a dispensing closure attached to the container body opening, and comprising closure walls, at least one dispensing aperture, at least one closing element that is movable relative to the closure walls between a first position where said dispensing aperture is closed, and a second position where the dispensing aperture is open and the product is dispensed, said closure further comprising at least one actionable means that surrounds said closure walls and said closing element,
(iii) a spring element disposed between said closing element and said closure walls, so as to naturally force the closing element in a position where it closes said aperture.

According to the present invention, the container is characterized in that said dispensing closure further comprises at least one connection element that is disposed between said actionable means and said closing element, said element being made of a material that is:
- rigid enough, when the temperature of the container is below a predetermined safety temperature, to connect said actionable means and said closing element, thus allowing a consumer to open the dispensing aperture by moving said actionable means, and
- fluid when the temperature of the container is above said safety temperature, so that said actionable means and said closing element are disconnected, thus preventing a consumer to open the dispensing aperture when moving said actionable means.

In a highly preferred embodiment of the invention, the safety temperature is comprised between -35°C and +50°C, even more preferably comprised between - 25°C and -10°C.

Also preferably, said connection element is a key.

In a preferred embodiment of the present invention, the actionable means comprises an outer ring that surrounds said closing element.

In a first embodiment of the invention, the closure walls can define a vertical cylindrical channel which is in fluid contact with the interior of the container body, and which comprises at least one lateral dispensing aperture in its upper part, said closing element having the shape of a ring that seals around the channel, and is movable relative to said channel by translation along an axis which is parallel to the longitudinal axis of the channel when the outer ring and the closing element are connected and the outer ring is translated downwards.

In the latter case, said closing element preferably comprises a first horizontal groove located in the periphery of its outer surface, and said outer ring comprises a second horizontal groove located in the periphery of its inner surface, a spring element being located between the dozing ring and the closure walls so as to force said closing ring in a position where it closes the dispensing aperture and the first and second grooves face each other, said key element being disposed in said first and second grooves.

Advantageously, in the latter case, the upper outer surface of said closing element protrudes out of said inner ring when said connection element is fluid and said outer ring is translated downwards by the consumer, said upper outer surface comprising indications to the consumer that the container temperature is above the safety temperature.

In a second embodiment of the invention, the closure walls can define a vertical cylindrical channel which is in fluid contact with the interior of the container body, and comprises at least one lateral dispensing aperture in its upper part, said closing element having the shape of a ring that seals around the said channel, and is movable relative to said channel by rotation around an axis which is parallel to the longitudinal axis of the channel when the outer ring and the closing element are connected and the outer ring is rotated.

In the latter embodiment, said channel preferably comprises a first vertical groove located in the periphery of its outer surface, and said closing ring comprises a second vertical groove located in the periphery of its inner surface, said first and second grooves being disposed such that they face each other when the closing ring closes the dispensing aperture, and said key element being disposed in said first and second grooves.

In a particularly preferred embodiment of the invention, the container comprises a pin attached to the closure walls and located inside the nozzle, and having a length such that it is normally arranged into the nozzle, and protrudes out of said nozzle when the actionable means and the closing means are pulled downwards by the consumer.

This pin acts as a "too cold" indicator, that warns the consumer when the contents is too cold to be dispensed: in this case, the product does not flow out of the container because it is solid, or at least too viscous, and therefore when the consumer pulls onto the actionable means, the pin protrudes out of the nozzle and is visible to the consumer. If the contents is warm enough to flow out of the container, then it is dispensed and flows out of the nozzle, thus hiding the "too cold" indicator that is located inside said nozzle.

Preferably, the container according to the invention contains a product which is a viscous product.

More preferably, said product is a frozen viscous food product.

Advantageously, the container according to the present invention is a pressurized container.

As it will be understood, the present invention achieves some improvements and advantages, over the containers previously known, which do not comprise a safety temperature system. Especially, the safety system is independent from the type of product that is stored into the container: the sole parameter to activate the safety system is the temperature of the container.

The invention will now be described in greater detail, with reference to the attached set of drawings, which represent one embodiment of a container according to the present invention. The following example is given by way of illustration only and in no way should be construed as limiting the scope and subject matter of the invention as described and claimed.
Figure 1 is a profile view of a container according to the present invention;
Figure 2 is a profile view of a closure according to the invention;
Figure 3 is a profile cut view of a closure according to the invention, in the closed configuration;
Figure 4 is an enlarged view of an alternative embodiment of the temperature safety system in a closure according to the invention, when the container temperature is below the safety temperature;
Figure 5 is a profile cut view of a closure according to the invention, in the open configuration;
Figure 6 is a profile cut view of a closure according to the invention, in the safety configuration;
Figure 7 is a profile cut view of an alternative embodiment of the temperature safety system in a closure according to the invention, when the container temperature is above the safety temperature and the closure is in the safety configuration;
Figure 8 is a profile cut view of the container in the dispensing configuration, in case the container temperature is too low, and the "too cold" indicator appearing in the nozzle region.

In the following description, and for the sake of clarity, the container of the invention as well as all of its components, are considered in the vertical position, so that the closed side of the container body is in contact with a flat horizontal support, and the side of the container body to which the closure is attached is oriented upwards.

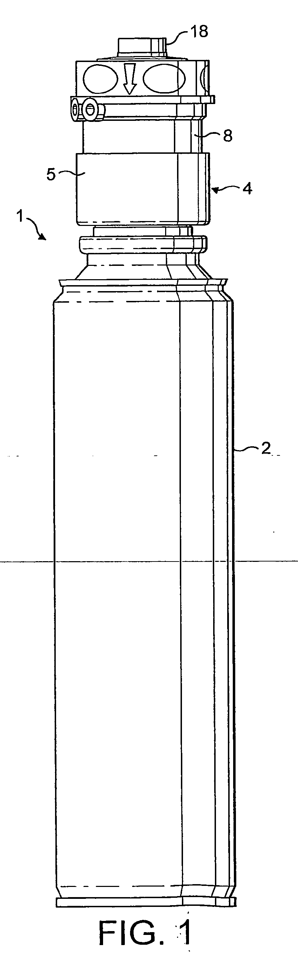

In the example shown in figure 1, the longitudinal axis of the container is vertical when said container is considered vertical.

Figure 1 represents one embodiment of a container according to the present invention.

The container 1 represented in figure 1 is a pressurized container for storing and dispensing a frozen viscous product, for example soft ice cream.

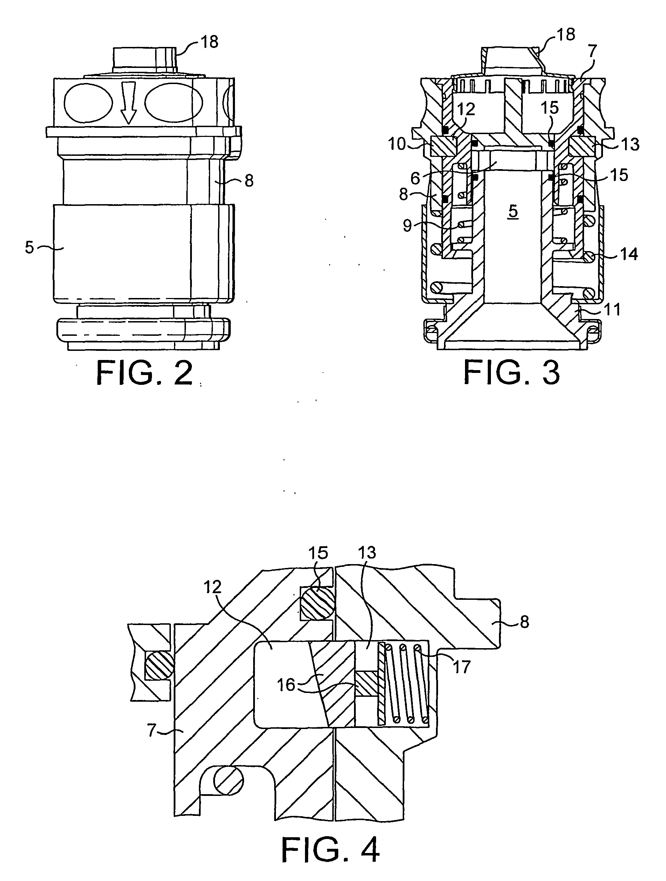

The container 1 comprises a container body 2 for containing the product having an opening 3, and a dispensing closure 4 sealingly attached to the container body opening 3 which is represented in an enlarged view in figure 2.

The dispensing closure 4 comprises closure walls 5, at least one dispensing aperture 6, at least one closing element 7 that is movable relative to the closure walls between a first position where said dispensing aperture 6 is closed, and a second position where the dispensing aperture is open and the product is dispensed.

The closure 4 further comprises at least one actionable means 8 that surrounds said closure walls 5 and said closing element 7.

A spring element 9 is disposed between said closing element 7 and said closure walls 5, so as to naturally force the closing element in a position where it closes said aperture 6.

According to the present invention, the container is characterized in that said dispensing closure 4 further comprises at least one connection element 10 that is disposed between said actionable means 8 and said closing element 7. Said connection element 10 is a key.

The key 10 is made of a material that is:
- rigid enough, below a predetermined safety temperature, to connect said actionable means 8 and said closing element 7, thus allowing a consumer to open the dispensing aperture 6 by moving said actionable means 8, and
- fluid, at or above said safety temperature, so that said actionable means 8 and said closing element 7 are disconnected, thus preventing a consumer to open the dispensing aperture 6 when moving said actionable means.

The material that is used for the connecting means 10 can comprise any eutectic material suitable for meeting the melting conditions stated above. It can be a pure liquid, or a mixture. It can be for example water, a propylene glycol based mix, an alcohol based mix, or even the same product as is contained inside the container body.

In the embodiment of the invention that is currently described, and having regard to the fact that the product contained inside the container is soft ice cream, the safety temperature is around -17°C.

The actionable means 8 comprises an outer ring that surrounds and is movable relative to said closing element 7.

In a first embodiment of the invention that is represented in figures 2 to 7, the closure walls 5 define a vertical cylindrical channel which is in fluid contact with the interior of the container body 2 .

The channel 5 comprises a lateral dispensing aperture 6 in its upper part, and a shoulder portion 11 in its lower part. The closing element 7 has the shape of a ring that seals around the channel 5, and is movable relative to said channel by translation along an axis which is parallel to the longitudinal axis of the channel.

In this latter case, as represented in figures 3 and 4, the closing element 7 comprises a first horizontal groove 12 located in the periphery of its outer surface, and said outer ring 8 comprises a second horizontal groove 13 located in the periphery of its inner surface.

The first and second grooves 12, 13 are disposed such that they face each other when the outer ring 8 closes the dispensing aperture 6, as represented in figure 3, and the key element 10 is disposed in said first and second grooves that both form an annular horizontal cavity.

A spring element 14 is located between the closing ring 7 and the closure walls 5 so as to force said ring in a position where the first and second grooves face each other. More precisely, this spring element 14 presses on the closure walls in the region of the shoulder 11.

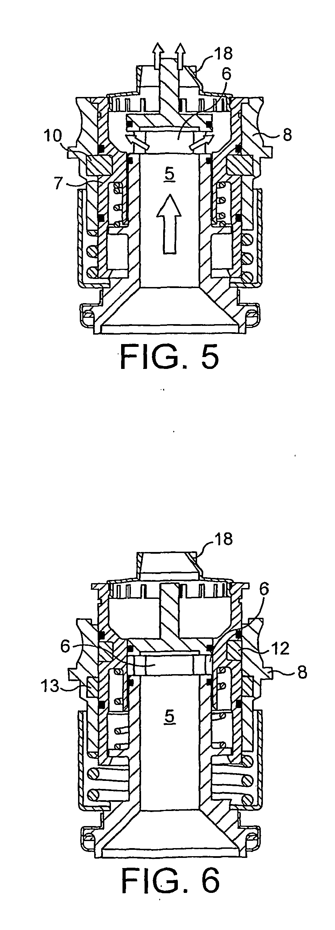

In the region of the keyway , the surfaces of the outer ring and the closing ring contact each other in a fluid-tight manner. The tightness is achieved by two horizontal annular joints 15 that are disposed between the closing ring and the outer ring. Both joints 15 are distant from each other so that the first and second grooves 12, 13 are contained in the space in-between the joints 15, as shown in figures 5 and 6.

Similar tightness joints are disposed between the channel and the inner ring.

The way of operating the container and closure of the invention is as follows.

At rest, the closing ring 7 is in the upward position and closes the lateral opening of the dispensing channel 5, as represented in figure 3. Simultaneously, the outer ring 8 is also in the upward position as represented in figure 3.

The first and second grooves 12, 13 of the closure face each other as represented in figure 3.

In the alternative embodiment represented in figure 4, the key element 10 located in the first and second grooves of the closure comprises not only a material that is liquid above -17°C, but also a mechanical element 16 that is biased and associated to a spring element 17 that forces the mechanical element across the first and second grooves 12, 13 of the closure to reinforce the connection between the outer ring 8 and the closing ring 7.

When the container temperature is below the predetermined safety temperature (for example less than -17°C in the present example), and when the consumer wishes to dispense some ice cream, he/she pulls the outer ring 8 downwards, as is represented in figure 5. Pulling the outer ring, leads the closing ring 7 downward as well, since both closing and outer rings are connected to each other by the rigid key 10, and ice cream can flow upwards, out of the channel 5 through the lateral dispensing aperture, as shown by arrows in the figure 5. A nozzle 18 can be added to give a particular shape to the dispensed product.

In case the container temperature is too low, the ice cream may be too viscous to flow, and a set of instructions will be therefore given to the consumer onto the container, explaining what is the best dispensing temperature range. In the case the container temperature would be too low, the consumer will have to warm it, for example by letting it out of the freezer at room temperature until the container temperature is higher enough.

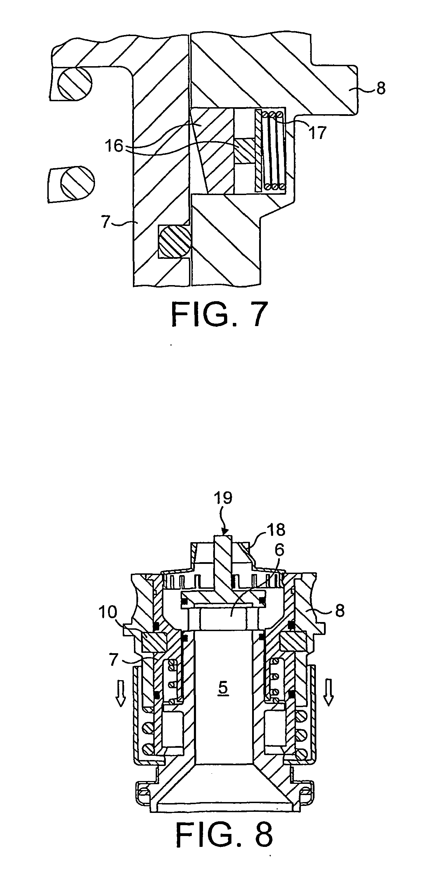

In this case, when the temperature of the container is too low, at the time the consumer pulls the outer ring downwards, as shown in the figure 8, the ice cream does not flow. At this time, the consumer can see a "too cold" indicator 19 which protrudes out of the nozzle 18, and which is marked with the wording "too cold". The "too cold" indicator has the shape of a pin attached to the closure walls and located inside the nozzle, and having a length such that it is normally arranged into the nozzle, and protrudes out of said nozzle when the actionable means and the closing means are pulled downwards by the consumer. A set of instructions written onto the container indicates the consumer how too proceed to raise the container's temperature properly in order to reach the dispensing temperature. At correct dispensing temperature, the ice cream normally flows out of the container nozzle, therefore hiding the "too cold" indicator, as shown in figure 5.

In the case the container temperature is too high, the key element 10 will become fluid, and will no longer connect the closing ring and the outer ring. In that case, as shown in figure 6, pulling downward the outer ring 8, will not lead the closing ring 7 downwards as well, and the channel dispensing aperture 6 will stay closed.

In that configuration, the outer upper surface of the closing ring becomes visible to the consumer, as shown in figure 6, and this visible portion can advantageously be printed with a message (not represented in the drawings), informing the consumer that the container temperature is too high for dispensing the contents.

In the alternative embodiment of the key , wherein said key comprises not only liquid but also a mechanical element 16, as represented in figure 7, since the key is fluid, forcing down the outer ring will cause the biased portion of the mechanical element to abut the outer surface of the closing ring and be forced horizontally into the groove of the outer ring, as shown in figure 7. This will result in the same configuration as that shown in figure 6, wherein the outer ring is pulled downwards, but the closing ring stays in the upward position, closing the lateral aperture of the dispensing channel.

In all cases, when the consumer releases the outer ring, said ring is forced upward by the spring element located between said outer ring and the closure walls, as it is illustrated in figure 3.

In a second embodiment of the invention (not represented in the drawings), the closure walls can define a vertical cylindrical channel which is in fluid contact with the interior of the container body, and comprises at least one lateral dispensing aperture in its upper part, said closing element having the shape of a ring that surrounds said channel, and is movable relative to said channel by rotation around an axis which is parallel to the longitudinal axis of the channel, a spring element being located between the closing ring and the closure walls so as to force said ring in a position where the first and second grooves face each other.

In this second embodiment, said closing ring comprises a first vertical groove located in the periphery of its outer surface, and said outer ring comprises a second vertical groove located in the periphery of its inner surface, said first and second grooves being disposed such that they face each other when the closing ring closes the dispensing aperture, and said key element being disposed in said first and second grooves.

The functionality of the container closure in this second embodiment does not change compared to that of the first embodiment described above. In this case, the dispensing of the product is achieved by rotating the outer ring around its longitudinal axis, instead of translating it downwardly as was the case for the first embodiment of the invention.

## Claims

1. A container for storing and dispensing a product, said container comprising:
(i) a container body having an opening, for containing the product,
(ii) a dispensing closure attached to the container body opening, and comprising closure walls, at least one dispensing aperture, at least one closing element that is movable relative to the closure walls between a first position where said dispensing aperture is closed, and a second position where the dispensing aperture is open and the product is dispensed, said closure further comprising at least one actionable means that surrounds said closure walls and said closing element,
(iii) a spring element disposed between said closing element and said closure walls, so as to naturally force the closing element in a position where it closes said aperture,
**characterized in that** said dispensing closure further comprises at least one connection element that is disposed between said actionable means and said closing element, said element being made of a material that is:
- rigid enough, when the temperature of the container is below a predetermined safety temperature, to connect said actionable means and said closing element, thus allowing a consumer to open the dispensing aperture by moving said actionable means, and
- fluid when the temperature of the container is above said safety temperature, so that said actionable means and said closing element are disconnected, thus preventing a consumer to open the dispensing aperture when moving said actionable means.

2. A container according to claim 1, wherein said safety temperature is comprised between -35°C and +50°C, more preferably comprised between -25°C and -10°C.

3. A container according to claims 1 or 2, wherein said connection element is a key.

4. A container according to claims 1 to 3, wherein said actionable means comprises an outer ring that surrounds said closing element.

5. A container according to claim 4, wherein the closure walls define a vertical cylindrical channel which is in fluid contact with the interior of the container body, and which comprises at least one lateral dispensing aperture in its upper part, said closing element having the shape of a ring that seals around the channel, and is movable relative to said channel by translation along an axis which is parallel to the longitudinal axis of the channel when the outer ring and the closing element are connected and the outer ring is translated downwards.

6. A container according to claim 5, wherein said closing element comprises a first horizontal groove located in the periphery of its outer surface, and said outer ring comprises a second horizontal groove located in the periphery of its inner surface, a spring element being located between the closing ring and the closure walls so as to force said closing ring in a position where it closes the dispensing aperture and the first and second grooves face each other, said key element being disposed in said first and second grooves.

7. A container according to claim 6, wherein the upper outer surface of said closing element protrudes out of said inner ring when said connection element is fluid and said outer ring is translated downwards by the consumer, said upper outer surface comprising indications to the consumer that the container temperature is above the safety temperature.

8. A container according to claim 4, wherein the closure walls define a vertical cylindrical channel which is in fluid contact with the interior of the container body, and comprises at least one lateral dispensing aperture in its upper part, said closing element having the shape of a ring that sealingly surrounds said channel, and is movable relative ta said channel by rotation around an axis which is parallel to the longitudinal axis of the channel, when the outer ring and the closing element are connected and the outer ring is rotated.

9. A container according to claim 8, wherein said closing ring comprises a first vertical groove located in the periphery of its outer surface, and said outer ring comprises a second vertical groove located in the periphery of its inner surface, said first and second grooves being disposed such that they face each other when the closing ring closes the dispensing aperture, and said key element being disposed in said first and second grooves.

10. A container according to claims 5 and 6, which comprises a pin attached to the closure walls and located inside the nozzle, and having a length such that it is normally arranged into the nozzle, and protrudes out of said nozzle when the actionable means and the closing means are pulled downwards by the consumer.

11. A container according to any of the preceding claims, wherein said product is a viscous product.

12. A container according to any of the preceding claims, wherein said product is a frozen viscous food product.

13. A container according to any of the preceding claims, **characterized in that** it is a pressurized container.

## Patentansprüche

1. Behälter zum Lagern und Ausgeben eines Produktes, wobei der Behälter umfasst:
(i) einen eine Öffnungaufweisenden Behälterkörper zum Fassen des Produktes,
(ii) einen Ausgabeverschluss, der an der Behälterkörperöffnung befestigt ist und Verschlusswände, mindestens eine Ausgabeöffnung, mindestens ein Verschlusselement aufweist, das relativ zu den Verschlusswänden zwischen einer ersten Stellung, in der die Ausgabeöffnung verschlossen ist, und einer zweiten Stellung, in der die Ausgabeöffnung offen und das Produkt ausgegeben wird, bewegbar ist, wobei der Verschluss weiterhin mindestens ein betätigbares Mittel aufweist, das die Verschlusswände und das Verschlusselement umgibt,
(iii) ein Federelement, das zwischen dem Verschlusselement und den Verschlusswänden angeordnet ist, um das Verschlusselement natürlich in eine Stellung zu drängen, in der es die Öffnung verschließt,
**dadurch gekennzeichnet, dass** der Ausgabeverschluss weiterhin mindestens ein Verbindungselement aufweist, das zwischen dem betätigbaren Mittel und dem Verschlusselement angeordnet ist, wobei das Element aus einem Material ist, das:
- wenn die Temperatur des Behälters unter einer vorbestimmten Sicherheitstemperatur ist, genügend fest ist, um das betätigbare Mittel mit dem Verschlusselement zu verbinden, um somit einem Verbraucher zu gestatten, die Ausgabeöffnung durch Bewegen des betätigbaren Mittels zu öffnen, und
- flüssig ist, wenn die Temperatur des Behälters über der Sicherheitstemperatur ist, so dass das betätigbare Mittel und das Verschlusselement voneinander getrennt sind, um somit einen Verbraucher daran zu hindern, die Ausgabeöffnung zu öffnen, wenn das betätigbare Mittel bewegt wird.

2. Behälter nach Anspruch 1, bei dem die Sicherheitstemperatur zwischen -35 °C und +50 °C, vorzugsweise zwischen -25 °C und -10 °C, liegt.

3. Behälter nach Anspruch 1 oder 2, bei dem das Verbindungselement ein Keil ist.

4. Behälter nach den Ansprüchen 1 bis 3, bei dem das betätigbare Mittel einen äußeren Ring aufweist, der das Verschlusselement umgibt.

5. Behälter nach Anspruch 4, bei dem die Verschlusswände einen vertikalen zylindrischen Kanal begrenzen, der in Flüssigkeitsverbindung mit dem Innenraum des Behälterkörpers ist und der mindestens eine seitliche Ausgabeöffnung in seinem oberen Teil aufweist, wobei das Verschlusselement die Form eines Ringes hat, der um den Kanal herum abdichtet und relativ zu dem Kanal durch Verschiebung entlang einer Achse bewegbar ist, die parallel zu der Längsachse des Kanals ist, wenn der äußere Ring und das Verschlusselement miteinander verbunden sind und der äußere Ring nach unten verschoben ist.

6. Behälter nach Anspruch 5, bei dem das Verschlusselement eine erste horizontale Nut aufweist, die im Umfang seiner äußeren Oberfläche angeordnet ist, und der äußere Ring eine zweite horizontale Nut aufweist, die im Umfang seiner inneren Oberfläche angeordnet ist, wobei ein Federelement zwischen dem Verschlussring und den Verschlusswänden angeordnet ist, um den Verschlussring in eine Stellung zu drängen, in der er die Ausgabeöffnung verschließt und die erste und die zweite Nut einander gegenüberstehen, wobei das Keilelement in der ersten und zweiten Nut angeordnet ist.

7. Behälter nach Anspruch 6, bei dem die obere äußere Oberfläche des Verschlusselements aus dem inneren Ring herausragt, wenn das Verbindungselement flüssig ist und der äußere Ring von dem Verbraucher nach unten verschoben ist, wobei die obere äußere Oberfläche Anzeigen für den Verbraucher aufweist, dass die Behältertemperatur über der Sicherheitstemperatur ist.

8. Behälter nach Anspruch 4, bei dem die Verschlusswände einen vertikalen zylindrischen Kanal begrenzen, der in Flüssigkeitsverbindung mit dem Innenraum des Behälterkörpers ist und mindestens eine seitliche Ausgabeöffnung in seinem oberen Teil aufweist, wobei das Verschlusselement die Form eines Ringes hat, der den Kanal dichtend umgibt und relativ zu dem Kanal durch Drehung um eine Achse bewegbar ist, die parallel zu der Längsachse des Kanals ist, wenn der äußere Ring und das Verschlusselement miteinander verbunden sind und der äußere Ring gedreht ist.

9. Behälter nach Anspruch 8, bei dem der Verschlussring eine erste vertikale Nut aufweist, die im Umfang seiner äußeren Oberfläche angeordnet ist, und der äußere Ring eine zweite vertikale Nut aufweist, die im Umfang seiner inneren Oberfläche angeordnet ist, wobei die erste und die zweite Nut derart angeordnet sind, dass sie sich gegenüberliegen, wenn der Verschlussring die Ausgabeöffnung verschließt, und wobei das Keilelement in der ersten und der zweiten Nut angeordnet ist.

10. Behälter nach den Ansprüchen 5 und 6, der einen Zapfen aufweist, der an den Verschlusswänden befestigt und innerhalb der Düse angeordnet ist und eine solche Länge hat, dass er normalerweise in der Düse angeordnet ist und aus der Düse herausragt, wenn das betätigbare Mittel und das Verschlussmittel von dem Verbraucher nach unten gezogen sind.

11. Behälter nach irgendeinem der vorhergehenden Ansprüche, bei dem das Produkt ein viskoses Produkt ist.

12. Behälter nach irgendeinem der vorhergehenden Ansprüche, bei dem das Produkt ein gefrorenes viskoses Nahrungsmittelprodukt ist.

13. Behälter nach irgendeinem der vorhergehenden Ansprüche, **dadurch gekennzeichnet, dass** er ein unter Druck stehender Behälter ist.

## Revendications

1. Récipient pour l'emmagasinage ou la distribution d'un produit, ledit récipient comportant :
(i) un corps de récipient ayant une ouverture, destiné à contenir le produit,
(ii) une fermeture de distribution reliée à l'ouverture du corps du récipient, et comportant des parois de fermeture, au moins un orifice de distribution, au moins un élément de fermeture qui est mobile par rapport aux parois de fermeture entre une première position dans laquelle ledit orifice de distribution est fermé, et une seconde position dans laquelle l'orifice de distribution est ouvert et le produit est distribué, ladite fermeture comportant en outre au moins un moyen actionnable qui entoure lesdites parois de fermeture et ledit élément de fermeture,
(iii) un élément à ressort disposé entre ledit élément de fermeture et lesdites parois de fermeture, afin d'amener naturellement à force l'élément de fermeture dans une position où il ferme ledit orifice,
**caractérisé en ce que**
ladite fermeture de distribution comporte en outre au moins un élément de liaison qui est disposé entre ledit moyen actionnable et ledit élément de fermeture, ledit élément étant formé d'une matière qui est :
- assez rigide, lorsque la température du récipient est inférieure à une température prédéterminée de sécurité, pour relier ledit moyen actionnable et ledit élément de fermeture, permettant ainsi à un consommateur d'ouvrir l'orifice de distribution en déplaçant ledit moyen actionnable, et
- fluide lorsque la température du récipient est au-dessus de ladite température de sécurité, afin que ledit moyen actionnable et ledit élément de fermeture ne soient pas reliés, empêchant ainsi un consommateur d'ouvrir l'orifice de distribution lorsqu'il déplace ledit moyen actionnable.

2. Récipient selon la revendication 1, dans lequel ladite température de sécurité est comprise entre -35°C et +50°C, plus avantageusement comprise entre -25°C et -10°C.

3. Récipient selon la revendication 1 ou 2, dans lequel ledit élément de liaison est une clavette.

4. Récipient selon les revendications 1 à 3, dans lequel ledit moyen actionnable comporte une bague extérieure qui entoure ledit élément de fermeture.

5. Récipient selon la revendication 4, dans lequel les parois de fermeture définissent un canal cylindrique vertical qui est en contact de fluide avec l'intérieur du corps du récipient, et qui comporte au moins un orifice latéral de distribution dans sa partie supérieure, ledit élément de fermeture ayant la forme d'une bague qui en entoure de façon étanche le canal, et est mobile par rapport audit canal par translation le long d'un axe qui est parallèle à l'axe longitudinal du canal lorsque la bague extérieure et l'élément de fermeture sont reliés et que la bague extérieure est translatée vers le bas.

6. Récipient selon la revendication 5, dans lequel ledit élément de fermeture comporte une première gorge horizontale située dans la périphérie de sa surface extérieure, et ladite bague extérieure comporte une seconde gorge horizontale située dans la périphérie de sa surface intérieure, un élément à ressort étant placé entre la bague de fermeture et les parois de la fermeture afin d'amener à force la bague de fermeture dans une position dans laquelle elle ferme l'orifice de distribution et les première et seconde gorges sont face à face, ledit élément à clavette étant disposé dans lesdites première et seconde gorges.

7. Récipient selon la revendication 6, dans lequel la surface extérieure supérieure dudit élément de fermeture fait saillie à l'extérieur de ladite bague intérieure lorsque ledit élément de liaison est fluide et que ladite bague extérieure est translatée vers le bas par le consommateur, ladite surface extérieure supérieure comportant des indications pour le consommateur selon lesquelles la température du récipient est supérieure à la température de sûreté.

8. Récipient selon la revendication 4, dans lequel les parois de la fermeture définissent un canal cylindrique vertical qui est en contact de fluide avec l'intérieur du corps du récipient, et qui présente au moins un orifice latéral de distribution dans sa partie supérieure, ledit élément de fermeture ayant la forme d'une bague qui entoure de façon étanche ledit canal, et est mobile par rapport audit canal par une rotation autour d'un axe qui est parallèle à l'axe longitudinal du canal, lorsque la bague extérieure et l'élément de fermeture sont reliés et qu'on fait tourner la bague extérieure.

9. Récipient selon la revendication 8, dans lequel ladite bague de fermeture comporte une première gorge verticale située dans la périphérie de sa surface extérieure, et ladite bague extérieure comporte une seconde gorge verticale située dans la périphérie de sa surface intérieure, lesdites première et seconde gorges étant disposées de manière à être face à face lorsque la bague de fermeture ferme l'orifice de distribution, et ledit élément à clavette étant disposé dans lesdites première et seconde gorges.

10. Récipient selon les revendications 5 et 6, qui comporte une tige reliée aux parois de la fermeture et située à l'intérieur de la buse, et ayant une longueur telle qu'elle est normalement disposée à l'intérieur de la buse, et fait saillie à l'extérieur de ladite buse lorsque le moyen actionnable et le moyen de fermeture sont tirés vers le bas par le consommateur.

11. Récipient selon l'une quelconque des revendications précédentes, dans lequel ledit produit est un produit visqueux.

12. Récipient selon l'une quelconque des revendications précédentes, dans lequel ledit produit est un produit alimentaire visqueux congelé.

13. Récipient selon l'une quelconque des revendications précédentes, **caractérisé en ce qu'**il s'agit d'un récipient sous pression.
